**Europäisches Patentamt**

**European Patent Office**

**Office européen des brevets**

(19)

(11) Veröffentlichungsnummer : **0 439 770 B1**

(12)

# EUROPÄISCHE PATENTSCHRIFT

(45) Veröffentlichungstag der Patentschrift :
**23.02.94 Patentblatt 94/08**

(21) Anmeldenummer : **90124373.3**

(22) Anmeldetag : **17.12.90**

(51) Int. Cl.$^5$ : **C02F 1/44**

(54) Verfahren zur Abtrennung von Schadstoffen und Gewinnung von Wertstoffen aus dem Abwasserstrom einer Kokerei.

(30) Priorität : **30.01.90 DE 4002624**

(43) Veröffentlichungstag der Anmeldung :
**07.08.91 Patentblatt 91/32**

(45) Bekanntmachung des Hinweises auf die
Patenterteilung :
**23.02.94 Patentblatt 94/08**

(84) Benannte Vertragsstaaten :
**AT BE FR GB IT NL**

(56) Entgegenhaltungen :
**EP-A- 0 095 144**
**EP-A- 0 409 423**
**WO-A-87/06491**
**WO-A-89/07636**
**DE-A- 3 532 390**

(73) Patentinhaber : **Thyssen Still Otto**
**Anlagentechnik GmbH**
**Christstrasse 9**
**D-44789 Bochum (DE)**

(72) Erfinder : **Tippmer, Kurt**
**Bromberger Strasse 34**
**W-4350 Recklinghausen (DE)**

(74) Vertreter : **Dahlkamp, Heinrich-Leo, Dipl.-Ing.**
**c/o Thyssen Still Otto Anlagentechnik GmbH**
**Patentabteilung Postfach 10 18 50**
**D-44718 Bochum (DE)**

## Beschreibung

Die Erfindung bezieht sich auf ein Verfahren zur Abtrennung von Schadstoffen und Gewinnung von Wertstoffen aus dem Abwasserstrom einer Kohleveredelungsanlage. Mit Kohleveredelungsanlage ist insbesondere eine Kokereianlage zur Hochtemperaturpyrolyse von Steinkohle gemeint.

Ein gattungsgemäßes Verfahren ist aus DE 35 32 390 Al bekannt, wobei ein bei der Verkokung oder anderen Kohleveredelungsprozessen anfallendes Abwasser nach einer Filterung, Entphenolung und Destillation mittels Umkehr-Osmose in ein in den Kokereiprozeß rückführbares salzarmes Permeat und eine konzentrierte Salzlösung aufgetrennt wird. Dabei ist vorgesehen, daß das Abwasser vor der Umkehr-Osmose einer Cross-Flow-Filtration im Bereich der Ultra- bis Mikrofilter zur Abtrennung von Kolloiden und suspendierten Partikeln unterzogen wird und das bei der Umkehr-Osmose anfallende Konzentrat nach einer eventuellen Vakuumverdampfung in den Verkokungs- oder einen anderen Kohleveredelungsprozeß zurückgeführt wird. Zur Entfernung größerer Chlormengen soll außerdem das Konzentrat ganz oder teilweise in heißer reduzierender Atmosphäre, vorzugsweise oberhalb von 1.000 °C, gespalten werden. Es hat sich gezeigt, daß die Aufarbeitung des Abwassers vor der Umkehrosmose mittels Cross-Flow-Filtration relativ aufwendig ist und die Aufarbeitung des Konzentrates ein Problem darstellt und weiterer Verbesserungen bedarf.

In der DE 38 03 905 Al ist ein ähnliches Verfahren zur Behandlung von Abwasser bekannt, wobei die konzentrierte Salzlösung zur Zerstörung der Schadstoffe bei einer geschlossenen, vergasenden Kokskühlung mit dem heißen Kammerkoks in Verbindung gebracht wird. Diese Zugabe der Salzlösung, z. B. in eine Kokstrockenkühlanlage, ist nicht immer zweckmäßig und günstig.

In der DE-P 39 09 062 ist weiterhin ein Verfahren zur Zersetzung von Abfallaugen aus Absorptionsprozessen vorgeschlagen, bei dem die in den Abfallaugen enthaltenen Schadstoffe durch eine Temperatur-Druck-Hydrolyse (TDH) bei Temperaturen von 250 bis 350 °C und Drücken von 50 bis 150 bar in der Flüssigphase in Produkte wie $H_2S$, $CO_2$ und $NH_3$ umgewandelt und in das Rohgas rückgeführt werden.

Die DE-A 25 53 840 bezieht sich schließlich auf ein Verfahren zur chemischen Behandlung von Abwässern, in denen organische Verbindungen enthalten sind, wobei die Abwässer bei Temperaturen oberhalb 100 °C, vorzugsweise 170 bis 200 °C, einer druckhydrolytischen Behandlung unterzogen werden.

Der Erfindung liegt die Aufgabe zugrunde, ein Verfahren zur Abtrennung von Schadstoffen und Gewinnung von Wertstoffen aus dem Abwasserstrom einer Kokerei vorzuschlagen, bei dem die vorgenannten Probleme nicht auftreten und insbesondere ein sauberes Wasser gewonnen werden kann, das zu 100 % als Brauchwasser genutzt werden kann.

Zur Lösung dieser Aufgabe werden die im Kennzeichen des Anspruches 1 aufgeführten Merkmale vorgeschlagen.

Erfindungsgemäß wird das vorzugsweise nach dem $NH_3$-Abtreiber anfallende Abwasser ohne Zwischenschaltung einer Cross-Flow-Filtrationsstufe direkt einem fraktionierenden Umkehr-Osmose(FRO)-System zugeleitet, dessen erste Stufe aus einem Rohr- oder Plattenmodul besteht, wobei die Überströmgeschwindigkeit größer als 1 m/sec oder das Mengenverhältnis Überlauf zum Permeat größer 30 : 1 ist. Das dabei in der ersten Stufe anfallende Retentat, das im wesentlichen aus einer wäßrigen Salzlösung besteht, wird in einem ein- oder mehrstufigen Eindampfsystem von einem Salzgehalt von ca. 50 bis 70 g/l auf mehr 500 g/l aufkonzentriert. Anschließend werden die gelösten Schadstoffe mit der konzentrierten Salzlösung mittels einer temperaturaktivierten Druck-Hydrolyse (TDH) zerstört und aus dem anfallenden Hydrolysat werden die restlichen, nicht toxischen Salze mittels einer Kristallisation (KR) abgetrennt.

Insbesondere durch die Verwendung eines Rohr- oder Plattenmoduls und die aufgeführte Überströmgeschwindigkeit vom Überlauf zum Permeat der ersten Stufe von mehr als 1 m/s ist der erfindungsgemäße Verzicht auf die Zwischenschaltung einer Cross-Flow-Filtration möglich geworden.

Es hat sich gezeigt, daß durch dieses erfindungsgemäße Verfahren der Wasseranteil des Abwassers unter Umständen zu 100 % als Brauchwasser zurückgeführt werden kann. Außerdem wird aus der metallogenen (Cl und F) angereicherten Salzlösung der FRO mittels der TDH/KR-Stufe eine $NH_4Cl$-Fraktion mit einer Konzentration von mehr als 99 % gewonnen.

In den Unteransprüchen 2 bis 11 sind ergänzende Verfahrensschritte zum erfindungsgemäßen Verfahren wiedergegeben.

Die spezielle Nutzung der in der zweiten Stufe der FRO anfallenden Phenollösung als Lösungsmittel für Naphthalin bei der Vorkühlung nach Anspruch 2 hat den Vorteil einer Einsparung an Teer-Wasser-Dispersion aus der Teerscheidung und einer Rückführung des Phenoles in den Rohteer über den Spülwasserkreislauf.

Durch die im Anspruch 3 vorgeschlagene Beheizung des $NH_3$-Abtreibers mit dem Brüdendampf der letzten Stufe des Eindampfsystemes wird nicht mehr Heizdampf benötigt als beim konventionellen Kühlwasser-Stripping.

Es hat als günstig erwiesen, die TDH bei Temperaturen von 200 bis 330 °C durchzuführen. Die dabei anfallenden gasförmigen Produkte werden zweckmäßigerweise zur Weiterbehandlung einem $H_2S$- und $NH_3$-Stripper der Kokereigasbehandlungsanlage zugeführt.

Die Kristallisation der bei der TDH anfallenden $NH_4$-Salze bei einer Temperatur von 25 bis 35 °C ist deshalb günstig, weil nach der Hydrolyse das $NH_4Cl$-Salz eine Reinheit von mehr 90 % hat und $SCN^-$ und $S_2O_3^{2-}$-Verunreinigungen im äußerst geringen ppm-Bereich aufweist.

Die Umwandlung der Salzfraktion nach der TDH in Na- oder Ca-Salze ist dann von Vorteil, falls aufgrund der Umstände eine Einleitung ins Meer möglich ist.

Es hat sich im Rahmen der Erfindung als günstig erwiesen, in dem Eindampfsystem die Salzlösung von etwa 50 bis 70 g/l auf mehr als 500 g/l aufzukonzentrieren.

Der bei dem Temperatur-Druck-Hydrolyse-Stripper anfallende Dampf kann analog zur Kombination Abtreiber/Entsäurer erfindungsgemäß auch im Entsäurer genutzt werden.

Schließlich kann die bei der FRO anfallende wäßrige Phenollösung entweder im Rohteer angereichert werden oder, gegebenenfalls nach einer Aufkonzentrierung in einer Pervaporationsstufe, als Rohphenol gewonnen werden. Durch die Rückführung der Phenollösungen innerhalb der Gas- und Wasseraufbereitungsanlage werden im Gegensatz zu anderen Entwicklungen die diversen Konzentrationen nur unwesentlich erhöht. Zum Beispiel erhöht sich der Phenolgehalt im Kohlewasser von 0,5 bis 1,0 g/l auf 1,5 bis 3,0 g/l. Der Anstieg von $NH_4Cl$-Berieselungswasser bzw. Kohlewasser beträgt nur ca. 50 %.

Die Erfindung wird anhand der beigefügten Figuren 1 bis 3 beispielsweise näher erläutert.

Figur 1    zeigt ein Schema des erfindungsgemäßen Verfahrens.

Figur 2    zeigt ein Schema der Abwasseraufbereitung mittels fraktionierender Umkehr-Osmose.

Figur 3    zeigt ein Schema der temperaturaktiven Druck-Hydrolyse in der Flüssigphase.

Bei der Kohlepyrolyse von Kokskohle (1) zu Koks (3) entstehende Wert- und Schadstoffe werden als Rohgas mit einer Temperatur von 800 bis 900 °C aus den Verkokungskammern der Koksofenbatterie (2) abgezogen und in der Vorlage (4) mittels eines Umlaufwasserstromes auf 80 bis 82 °C gequencht. Nach Trennung des wasserdampfgesättigten Rohgases vom Quenchwasser und den Kondensaten (10) erfolgt im Teer-Wasser-Scheider (7) die Separation von Rohteer (15) und Wasser (14) sowie die Abtrennung des überschüssigen Pyrolysewassers und der Prozeßkondensate als Kohlewasser (11). Das Koksofenrohgas wird in einem Vorkühlsystem (5) bei Anwendung einer Teer-Wasser-Dispersion (14) für die Naphthalinextraktion auf 20 bis 22 °C abgekühlt und über (6) abgezogen. Die anfallenden Kondensate (17) einschließlich der rückgeführten Prozeßkondensate (16) aus der Koksofengasreinigung werden über die Vorlage (4) in das Umlaufwassersystem zurückgeführt.

Im Teer-Wasser-Scheider (7) verteilen sich gemäß den chemischphysikalischen Verteilungsgesetzen Wert- und Schadstoffe in die Teer- und die Wasserphase, so daß das anfallende Kohlewasser (11) entsprechend beladen ist.

Geht man für die weitere Abwasser-Aufbereitung als Ausgangswert von einer stündlichen Kohlewassermenge von 30 m³ aus, so beträgt die Salzfracht des Kohlewassers 501 kg und die organische Beladung 91 kg. In der Regel wird das Kohlewasser (11) unter Zugabe von NaOH in einem Desorbersystem gestrippt und anschließend gemeinsam mit dem gestrippten Überschußwasser der Koksofenreinigung (29 m³) in einem biologischen System behandelt. Nach der Reaktion des $NH_4^+$ mit dem $Na^+$ erhöht sich die Salzfracht im Wasser auf ca. 550 kg. Durch Zugabe von Frischwasser (42 m³) und Chemikalien (1 m³) ergibt sich letztlich nach der biologischen Reinigung eine Abwassermenge von 106 m³, deren $BSB_5$-Wert auf ein Niveau von < 50 mg/l gesenkt worden ist, dessen Salzfracht jedoch > 560 kg (ca. 5,3 g/l) beträgt. Bei der biologischen Behandlung des Abwassers entstehen ca. 40 kg trockene Biomasse, die als Schlamm zur Kokskohle zurückgeführt werden müssen.

Andere Verfahren zur Wasseraufbereitung, wie z. B. die adsorptive Entfernung von polaren Stoffen mittels Aktivkohlen oder -koksen, sind in puncto Absenkung des $BSB_5$-Wertes ebenfalls sehr effektiv, scheitern aber in der Regel an den hohen Betriebskosten.

Besonders schwierig oder sogar unmöglich wird es für alle bekannten Verfahren dann, wenn die neuen Verordnungen im Falle der Limitierung von P und N für Abwasser zwecks Einleitung in natürliche Wässer zur Anwendung kommen.

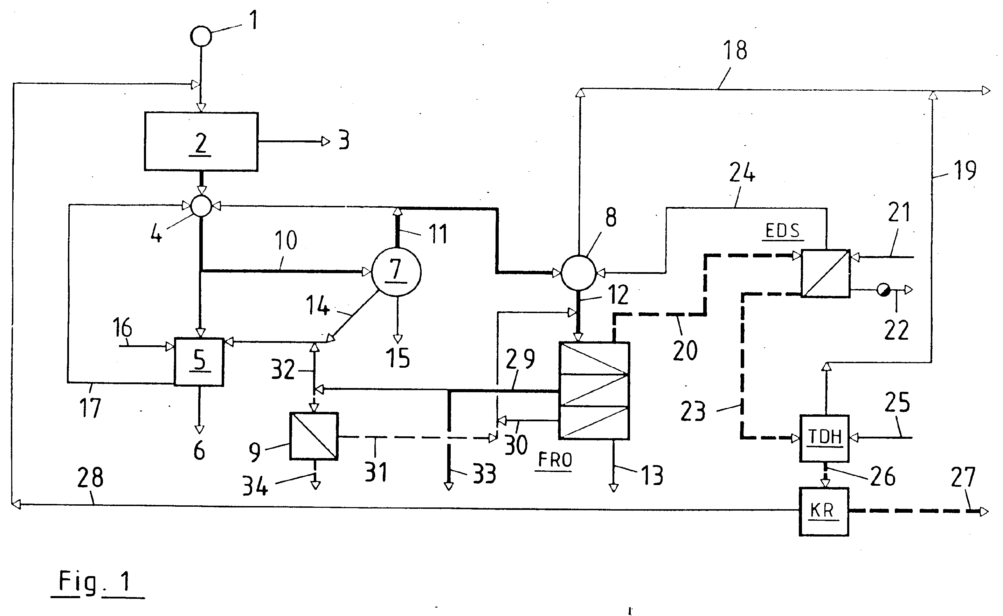

Diese Probleme hat das erfindungsgemäße Verfahren, das auf der Basis der neuen Ideen der FRO und TDH entwickelt worden ist, nicht. Das Prinzip ist in der Figur 1 dargestellt, und zwar für verschiedene Verwertungsmöglichkeiten der Phenollösung (29) bis (34) und einer neuen Variante der TDH/KR, der Zwangsabtrennung der Halogene (Cl) aus dem Wasserkreislauf.

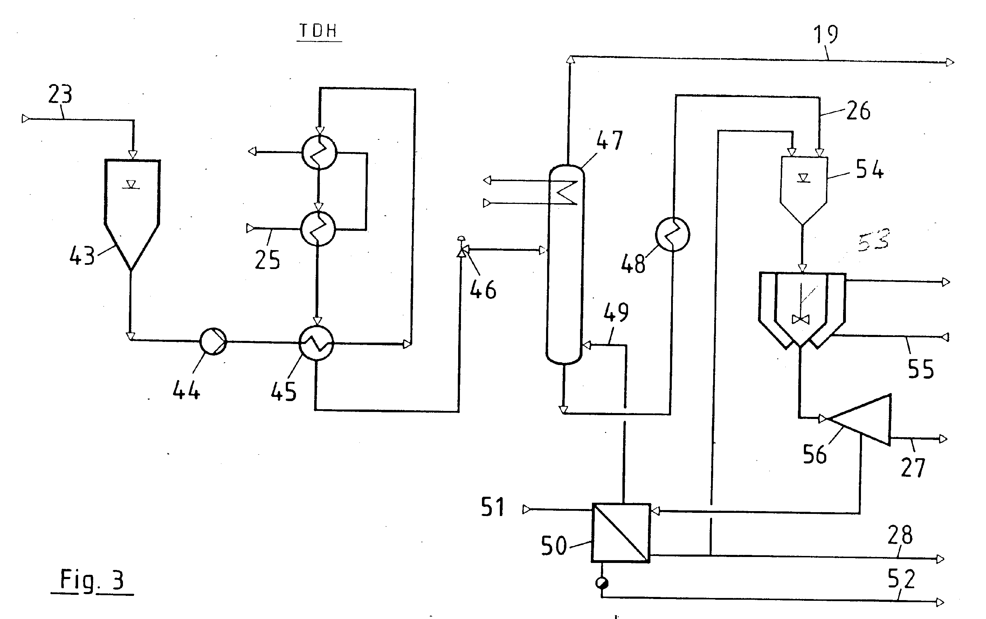

Bei dem erfindungsgemäßen Verfahren werden die thermisch flüchtigen ($NH_4^+$-) Verbindungen, die Pyridine und Aromaten sowie 10 bis 15 % der Phenole im Desorber (8) mittels 6 bis 6,5 t Strippdampf (24) bei ca. 100 °C aus dem Kohlewasser (11) nach vorheriger Kiesfilterung (35), (36) ausgetrieben. Das Desorbat am Kopf des Desorbers (8) ist mit ca. 35 % des Strippdampfes beladen und wird als Sauergas (18) zum Entsäurer der Gasentschwefelung geführt, wo der Dampfanteil weiterhin als Stripp- und Heizdampf genutzt werden kann. Als Strippdampf für den Desorber (8)/(47) werden, nach Figur 3, die Brüden (49) (ca. 1,4 bar) der letzten Eindampfstufe (50) des EDS benutzt. Das aus dem Sumpf des Desorbers (8)/(47) abgezogene Abwasser (12) in einer Menge von 34 m³ ist noch beladen mit 501 kg nicht flüchtigen $NH_4^+$-Salzen und 61 kg Phenolen sowie flüchtigen Komponenten in folgender Größenordnung:

$$NH_3 < 50 \text{ mg/l}$$
$$H_2S < 5 \text{ mg/l}$$
$$HCN < 5 \text{ mg/l}$$
$$CO_2 < 20 \text{ mg/l}$$

sowie Spuren aromatischer Stoffe. Dieses Abwasser (12) wird durch Wärmeaustausch gekühlt und über die ph-Kontrolle (37) mit eventueller Zugabe von Säure (39) und aus Sicherheitsgründen über das Kontrollfilter (40) mit ca. 30 °C dem System der fraktionierenden Umkehr-Osmose (FRO) zugeführt.

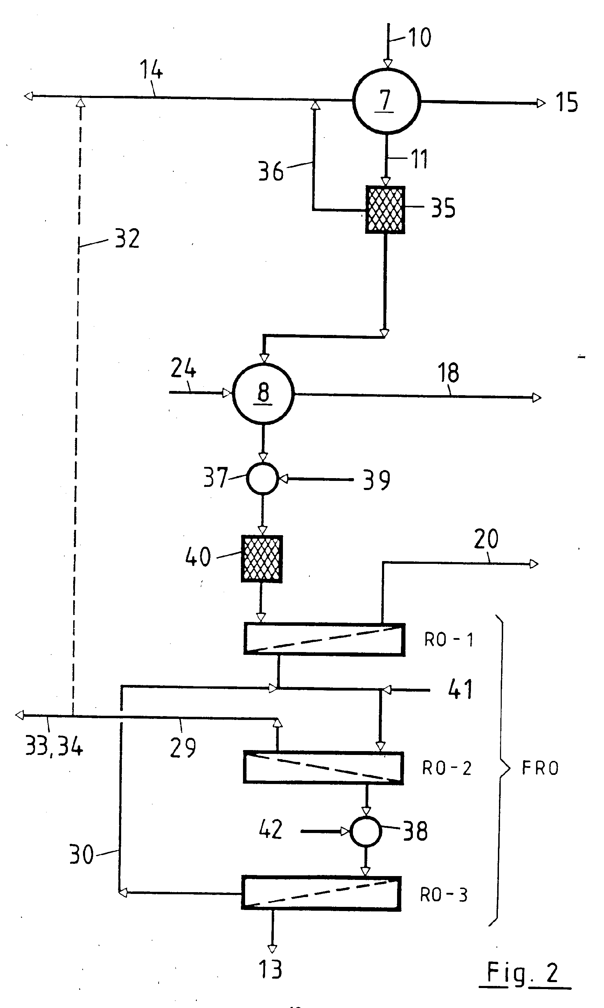

Die FRO ist ein mehrstufiges System, bestehend aus Membranmodulen mit unterschiedlichen Membranen und variablen pH-Werten in den einzelnen Stufen (vgl. Figur 2). Das Abwasser (12) nach dem Desorber (8) in einer Menge von 34 m³ oder, im Falle des Phenolwasser-Recycling (32), von 37 m³ hat einen pH-Wert von 8,5 und wird durch die Zugabe einer Säure (39) (ca. 2,5 kg HCl) auf einen pH-Wert von 5 eingestellt. In der ersten Umkehr-Osmose-Stufe (RO-1), als Rohrmodul mit CA (Celluloseacetat) als Trennmembran konzipiert, wird Abwasser in eine Salzlösung (20) von 12,4 bzw. 14 m³ und einen Permeatstrom von 24,1 bis 23 m³ bei einer Überströmungsgeschwindigkeit von 1,0 bis 1,2 m/s aufgeteilt. Die wesentlichen Kenngrößen dieser Stoffe sind ein Rückhaltevermögen für $NH_4^+$-Salze von mehr als 95 % und für Phenole von 0. Für die zweite Umkehr-Stufe (RO-2) wird der pH-Wert des aus der (RO-1) ablaufenden Permeates durch Zugabe einer Base (41) (NaOH) auf einen pH-Wert von 9 angehoben. Bei diesem pH-Wert und PA (Polyamide) als Trennmembran wird der Feed-Strom von 24,1 bzw. 23 m³ in einen Retentat-Strom (29) von 2,5 m³ und einen Permeatstrom von 21,6 bzw. 20,5 m³ aufgeteilt. Durch die Veränderungen im pH-Wert und der Art der Trennmembrane ergeben sich Rückhalte-Werte von mehr 95 % für Phenole und mehr als 98 % für $NH_4^+$-Salze. Die dritte Umkehr-Osmose-Stufe (RO-3), gegebenenfalls auch eine vierte, arbeitet unter Verwendung der ph-Wertkontrolle (38) und Zugabe einer Base (42) bei pH-Werten von > 11 bzw. 12 und Trennmembranen aus PA. Die Retentate (30) dieser Stufen werden jeweils vor die zweite Umkehr-Osmose-Stufe recycled. Als Permeat wird letztlich ein Brauchwasserstrom (13) von 21,6 bzw. 20,5 m³ gewonnen.

Die Alternative zum Recycling des Phenolwassers über die Leitung (29) und (32) zu den Vorkühlern (5) ist die Möglichkeit, die Phenollösung in einer zweistufigen Pervaporationsanlage (9) zu behandeln und 37 kg Rohphenol als eine 70 %-ige Wasserlösung über Leitung (34) zu gewinnen. Das salzhaltige phenolarme Retentat der Pervaporationsstufe wird dann über Leitung (31) gemeinsam mit dem Phenolwasser (30) der dritten Stufe zur ersten Stufe zurückgeführt.

Bei der Anwendung der Pervaporationsstufe wird die Salzfracht vor dem Desorber (8) auf 660 kg angehoben bei einer Phenolmenge von 72 kg. Das Recycling des Pervaporationsretentates bedingt eine Veränderung der Beladungen vor der ersten Umkehr-Osmose-Stufe von 710 kg Salz und 67 kg Phenol.

Das Recycling der Phenollösung bewirkt bereits eine deutliche Veränderung der Beladungen im Kohlewasser (11) vor dem Desorber von 710 kg Salz und 89 kg Phenol, so daß mit einer Cl⁻-Menge von 5 kg im Rohteer gerechnet werden muß.

Die über das Rohgas eingetragene Halogenmenge (27) von 258 kg (Cl⁻) wird aus dem System ausgeschleust. Von dieser Menge werden ca. 3 kg in dem Abwasser der Gasentschwefelung und ca. 5 kg im Rohteer erscheinen. Die Restmenge von ca. 250 kg Cl⁻ wird als $NH_4Cl$-Fraktion in der Größenordnung von 380 kg gewonnen. Das Retentat der ersten Umkehr-Osmose-Stufe von 12,4 bzw. 14 m³ Wasser wird in einem Eindampfsystem (EDS) auf ca. 1 m³ Wasser aufkonzentriert. Das mehrstufige EDS ist so konzipiert, daß der notwendige Heizdampf (21) von 6 bzw. 6,5 t - abgesehen von dem Kondensat (22) - indirekt als Brüdendampf der letzten Stufe für den Kühlwasserdesorber (8) genutzt werden kann. Die konzentrierte Salzlösung (23) wird über Einsatzbehälter (43), Pumpe (44) und Wärmetauscher (45) unter Zugabe von Energie (25) in die TDH-Anlage gegeben, die nach dem Prinzip der temperaturaktivierten Druck-Hydrolyse in der Flüssigphase bei 300 °C arbeitet. Bei diesen Prozeßbedingungen werden $SCN^-$ und $S_2O_3^{2-}$ zu $H_2S$, $NH_3$ und $CO_2$ hydrolysiert. Aus dem über Ventil (46) abgezogenen Hydrolysat werden in dem Desorber (47) die gasförmigen Produkte mit Dampf (49) gestrippt und als Hydrolysegas (19) im Entsäurer der Gasentschwefelung verarbeitet. Aus dem gestrippten Hydrolysat (26) wird die $NH_4$-Salzfraktion (27) durch Kristallisation (KR) und anschließender Behandlung in einer Dekantierzentrifuge (56) abgetrennt. Dabei wird das Hydrolysat (26) nach Figur 3 über den Pufferbehälter (54), das Rührwerk (53) mit Kühlwasserzugabe (55), die Zentrifuge (56) und über den Eindicker (50) geleitet, der eine Heizdampfzugabe (51) und einen Kondensatabzug (52) besitzt. Die Restlösung von 0,4 m³, beladen mit 240 kg Salz (Cl⁻ = 80 kg), hat nur noch Spuren von $SCN^-$ und $S_2O_3^{2-}$, aber noch größere Mengen an $(NH_4)_2SO_4$ sowie 24 bzw. 30 kg Phenole, die in den Pyrolyseprozeß über die Leitung (28) zur Einsatzkohle recycled wird. Die Salze und organischen Produkte werden in der Pyrolyse bei einer Temperatur von mehr als 1.000 °C in reduzierender Atmosphäre zerstört und erscheinen als Folgeprodukte $H_2S$, $NH_3$, $CO_2$, CO und $H_2$ sowie 80 kg $Cl^-$ wieder im Rohgas.

Bezugszeichenliste

| | |
|---|---|
| (1) | Kokskohle |
| (2) | Koksofenbatterie |
| (3) | Koks |
| (4) | Vorlage |
| (5) | Vorkühler |
| (6) | Koksofengas |
| (7) | Teer-Wasser-Scheider |
| (8) | Abtreiber (Desorber) |
| (9) | Pervaporation |
| (10), (11) | Kohlewasser |
| (12) | Abtreiber-Abwasser |
| (13) | Brauchwasser |
| (14) | Teer-Wasser-Dispersion |
| (15) | Rohteer |
| (16) | Rückkühlwasser |
| (17) | Spülwasser |
| (18) | Sauergas zum Entsäuern |
| (19) | Hydrolysegas |
| (20) | Salzlösung |
| (21) | Heizdampf |
| (22) | Kondensat |
| (23) | konzentrierte Salzlösung |
| (24) | Heiz-Stripp-Dampf |
| (25) | Energie |
| (26) | Hydrolysat |
| (27) | Chlor-Salz-Fraktion |
| (28) | Restlösung ($SO_4^{2-}$) |
| (29) | bis |
| (33) | Phenolwasser |
| (34) | Rohphenol |
| (35) | Kiesfilter |
| (36) | Rücklaufwasser |
| (37), (38) | pH-Kontrolle |
| (39) | Säure |
| (40) | Kontrollfilter |
| (41), (42) | Base |
| (43) | Einsatzbehälter |
| (44) | Pumpe |
| (45) | Wärmetauscher |
| (46) | Ventil |
| (47) | Desorber |
| (48) | Kühler |
| (49) | Strippdampf |
| (50) | Eindicker |
| (51) | Heizdampf |
| (52) | Dampfkondensat |
| (53) | Rührwerk |
| (54) | Pufferbehälter |
| (55) | Kühlwasser |
| (56) | Dekantierzentrifuge |
| | |
| FRO | fraktionierende Umkehr-Osmose |

EDS          Eindampfsystem
TDH          Temperatur-Druck-Hydrolyse
KR           Kristallisation
RO-1         Umkehr-Osmose-Stufe 1
RO-2         Umkehr-Osmose-Stufe 2
RO-3         Umkehr-Osmose-Stufe 3


**Patentansprüche**

1.   Verfahren zur Abtrennung von Schadstoffen und Gewinnung von Wertstoffen aus dem Abwasserstrom einer Kohleveredelungsanlage, **dadurch gekennzeichnet**, daß das bei der Kohlenumwandlung und der Koksofengasreinigung, vorzugsweise nach dem $NH_3$-Abtreiber, anfallende Abwasser ohne Zwischenschaltung einer Cross-Flow-Filtration direkt einem fraktionierenden Umkehr-Osmose (FRO)-System zugeleitet wird, dessen erste Stufe aus einem Rohr- oder Plattenmodul besteht, wobei die Überströmgeschwindigkeit größer als 1 m/sec oder das Mengenverhältnis Überlauf zum Permeat größer 30 : 1 ist.

2.   Verfahren nach Anspruch 1, **dadurch gekennzeichnet**, daß die in der zweiten Stufe der fraktionierenden Umkehr-Osmose (FRO) anfallende Phenollösung getrennt oder gemeinsam mit einer Teer-Wasser-Dispersion als Lösungsmittel für aussublimiertes Naphthalin bei der Vorkühlung des Koksofengases genutzt wird.

3.   Verfahren nach Anspruch 1, **dadurch gekennzeichnet**, daß das in der ersten Stufe anfallende Retentat, das im wesentlichen aus einer wäßrigen Salzlösung besteht, in einem ein- oder mehrstufigen Eindampfsystem aufkonzentriert wird und die gelösten Schadstoffe mit der konzentrierten Salzlösung mittels einer Temperatur-Druck-Hydrolyse (TDH) zur Umwandlung der Schadstoffe bei Temperaturen von 200 bis 330 °C zerstört werden.

4.   Verfahren nach Anspruch 3, **dadurch gekennzeichnet**, daß der $NH_3$-Abtreiber (Abwasser-Stripper) mit dem Brüdendampf der letzten Stufe des Eindampfsystems direkt oder indirekt beheizt wird.

5.   Verfahren nach Anspruch 3, **dadurch gekennzeichnet**, daß die bei der Temperatur-Druck-Hydrolyse (TDH) anfallenden gasförmigen Produkte zur Weiterbehandlung einem $H_2S$- und $NH_3$-Stripper der Kokereigasbehandlungsanlage zugeführt werden.

6.   Verfahren nach Anspruch 3, **dadurch gekennzeichnet**, daß aus dem bei der Temperatur-Druck-Hydrolyse anfallenden Hydrolysat die restlichen, nicht toxischen Salze mittels einer Kristallisation (KR) abgetrennt werden und die dabei anfallende salzarme bzw. chlorarme Restlösung zur Kokskohle zurückgegeben wird zwecks Zerstörung von $SO_4$-Ionen und Restanteilen von SCN- und $S_2O_3$-Ionen bei der Hochtemperatur-Pyrolyse der Steinkohle.

7.   Verfahren nach mindestens einem der vorhergehenden Ansprüche, **dadurch gekennzeichnet**, daß die bei der Temperatur-Druck-Hydrolyse (TDH) anfallenden $NH_4Cl$-Salze durch eine Kristallisation (KR) bei 25 bis 35 °C aus dem Hydrolysat abgetrennt werden.

8.   Verfahren nach mindestens einem der vorhergehenden Ansprüche, **dadurch gekennzeichnet**, daß die bei der Temperatur-Druck-Hydrolyse (TDH) anfallende $NH_4Cl$-Salzfraktion in Na- oder Ca-Salze umgewandelt wird, die dann gegebenenfalls ins Meer abgeleitet oder anderweitig verwendet werden kann.

9.   Verfahren nach Anspruch 3, **dadurch gekennzeichnet**, daß das bei der fraktionierenden Umkehr-Osmose (FRO) anfallende Retentat auf einen Salzgehalt von mehr als 500 g/l durch Eindampfen aufkonzentriert wird.

10.  Verfahren nach mindestens einem der vorhergehenden Ansprüche, **dadurch gekennzeichnet**, daß die bei der fraktionierenden Umkehr-Osmose (FRO) anfallende wäßrige Phenollösung in einem Pervaporationssystem zu einer Rohphenolfraktion aufkonzentriert wird.

## Claims

1. A process for the separation of contaminants and recovery of valuable substances from the effluent water stream of a coal refinement plant, **characterized in that** the effluent water obtained on coal conversion and coke oven gas purification, preferably at a point downstream of the NH$_3$ stills is passed directly without an intermediate cross-flow filtration to a fractionating reverse osmosis (FRO) system, the first stage of which consists of a tube and plate module, with the overflow velocity being faster than 1 m/sec or with the quantitative ratio of overflow versus permeate being greater than 30 : 1.

2. A process according to claim 1, **characterized in that** the phenolic solution obtained in the second stage of the fractionating reverse osmosis (FRO) is separated and utilized jointly with a tar water dispersion as solvent for out-sublimated naphthalene in the precooling of coke oven gas.

3. A process according to claim 1, **characterized in that** the retention substance obtained in the first stage which mainly consists of a hydrous salt solution is enriched in its concentration in a one-stage or mulit-stage evaporation system and that the dissolved contaminants with the concentrated salt solution are distroyed by means of a temperature-pressure hydrolysis (TDH) for conversion of contaminants at temperatures of 200 to 330 °C.

4. A process according to claim 3, **characterized in that** the NH$_3$ still (effluent water stripper) is heated directly or indirectly with the vapour steam of the last stage of the evaporation system.

5. A process according to claim 3, **characterized in that** the gaseous products obtained in the temperature pressure hydrolysis (TDH) are passed to an H$_2$S and NH$_3$ stripper of the coke oven gas treatment plant for further treatment.

6. A process according to claim 3, **characterized in that** the remaining non-toxic salts are separated by means of a crystallization (KR) from the hydrolyzate obtained in the temperature pressure hydrolysis and that the remaining solution being poor in salt and chlorine obtained thereby is fed back to the coking coal for destruction of SO$_4$ ions and remaining constituents of SCN and S$_2$O$_3$ ions in high-temperature pyrolysis of hard coal.

7. A process according to at least one of the preceding claims, **characterized in that** the NH$_4$Cl salts obtained in temperature pressure hydrolysis (TDH) are separated by a crystallization (KR) at 25 to 35 °C from the hydrolyzate.

8. A process according to at least one of the preceding claims, **characterized in that** the NH$_4$Cl salt fraction obtained in the temperature pressure hydrolysis (TDH) is converted into Na or Ca salts which can be discharged into the ocean or be utilized elsewhere.

9. A process according to claim 3, **characterized in that** the retention substance obtained in the fractionating reverse osmosis (FRO) is enriched in its concentration to more than 500 g/l by way of evaporation.

10. A process according to at least one of the preceding claims, **characterized in that** the hydrous phenolic solution obtained in the fractionating reverse osmosis (FRO) is enriched in its concentration in an evaporation system to a raw phenol fraction.

## Revendications

1. Procédé d'élimination de substances nocives et de récupération de substances utiles d'un courant d'eaux résiduaires d'une installation de valorisation du charbon **caractérisé par le fait** lors de la transformation du charbon et le nettoyage du gaz du four de cokerie, de préférence en aval de la colonne de strippage NH$_3$, les eaux résiduaires générées sont envoyées directement, sans passage dans un système de filtation cross-flow, dans un système d'osmose inverse de fractionnement (FRO) dont la première étape se compose d'un module à tubes ou à plateaux, la vitesse de débordement étant supérieure à 1 m/sec ou le rapport de quantité entre trop-plein et permeat étant supérieur à 30 : 1.

2. Procédé selon la revendication 1 **caractérisé par le fait** que la solution phénolique générée dans la deuxième étape de l'osmose inverse de fractionnement (FRO) est utilisée séparément ou avec une dispersion goudron-eau comme agent de dissolution pour la naphtaline générée lors de la condensation primaire du gaz de four à coke.

3. Procédé selon la revendication 1 **caractérisé par le fait** que le rétentat généré dans la première étape et constitué essentiellement par une solution saline aqueuse est concentré dans un système de concentration à 1 ou plusieurs étapes et que les substances nocives dissoutes sont détruites au moyen d'une hydrolyse température-pression (TDH) avec la solution saline concentrée dans le but de transformer les substances nocives à des températures de 200 à 330 °C.

4. Procédé selon la revendication 3 **caractérisé par le fait** que la colonne de strippage $NH_3$ (strippage des eaux résiduaires) est chauffée directement ou indirectement avec les buées de la dernière phase du système de concentration.

5. Procédé selon la revendication 3 **caractérisé par le fait** que les produits gazéiformes générés lors de l'hydrolyse température-pression sont envoyés dans une installation de strippage $H_2S$ et $NH_3$ de l'installation de traitement du gaz de cokerie pour y être transformés.

6. Procédé selon la revendication 3 **caractérisé par le fait** que les sels restants non toxiques sont éliminés de l'hydrolysat résultant de l'hydrolyse température-pression au moyen de la cristallisation (KR) et que la solution restante pauvre en sel et en chlore est renvoyée dans le charbon à coke en vue de la destruction des ions $SO_4$ et des restes de ions SCN et de $S_2O_3$ lors de la pyrolyse à haute température de la houille.

7. Procédé selon au moins l'une des revendications précédentes **caractérisé par le fait** que les sels $NH_4CL$ générés lors de l'hydrolyse température pression (TDH) sont éliminés de l'hydrolysat au moyen d'une cristallisation (KR) à une température de 25 à 35 °C.

8. Procédé selon au moins l'une des revendications précédentes **caractérisé par le fait** que la fraction de sels $NH_4CL$ générée lors de l'hydrolyse température-pression (TDH) est tranformée en sels Na et Ca qui, s'il y a lieu, sont rejetés à la mer ou dans un autre endroit.

9. Procédé selon la revendication 3 **caractérisé par le fait** que le rétentat généré dans l'osmose inverse de fractionnement (FRO) est concentré par évaporation pour obtenir une teneur en sel de plus de 500 g/l.

10. Procédé selon au moins l'une des revendications précédentes **caractérisé par le fait** que la solution phénolique aqueuse générée dans l'osmose inverse de fractionnement (FRO) est concentrée dans un système de pervaporation pour donner une fraction de phénol brut.

Fig. 1

EP 0 439 770 B1

EP 0 439 770 B1

Fig. 2

10

TDH

Fig. 3

EP 0 439 770 B1